# EUROPÄISCHE PATENTSCHRIFT

(11) **EP 0 937 363 B1**
(45) Veröffentlichungstag und Bekanntmachung des Hinweises auf die Patenterteilung: **15.02.2006**
(21) Anmeldenummer: 98931881.1
(22) Anmeldetag: 21.07.1998
(51) Int. Cl.: H04Q 3/00, H04M 3/00

(54) **VERFAHREN ZUM BEREITSTELLEN VON EINRICHTUNGEN ZUR ECHOUNTERDRÜCKUNG IN EINEM KOMMUNIKATIONSNETZ**
METHOD FOR ACTIVATING ECHO SUPPRESSION IN A COMMUNICATION NETWORK
PROCEDE POUR ACTIVER DES SYSTEMES SERVANT A SUPPRIMER L'ECHO DANS UN RESEAU DE COMMUNICATION

(30) Priorität: 21.08.1997 CH 195897
(43) Veröffentlichungstag der Anmeldung: 25.08.1999
(73) Patentinhaber: Siemens Schweiz AG, 8047 Zürich (CH)
(72) Erfinder: GOLDSTEIN, Peter, CH-8800 Thalwil (CH)
(74) Vertreter: Kley, Hansjörg
(86) Internationale Anmeldenummer: PCT/CH1998/000317
(87) Internationale Veröffentlichungsnummer: WO 1999/011075

(56) Entgegenhaltungen:
- US-A- 5 123 009
- ERIKSSON A ET AL: "ERICSSON ECHO CANCELLERS. A KEY TO IMPROVED SPEECH QUALITY" ERICSSON REVIEW, Bd. 73, Nr. 1, 1. Januar 1996, Seiten 25-33, XP000584598
- "General Recommendations on Telephone Switching and Signalling, Functions and Information Flows for services in the ISDN, Rec. Q.115" 1989 , CCITT , GENF, CH XP002102227 in der Anmeldung erwähnt siehe Seite 481, Absatz 3.2 siehe Seite 483, Absatz 3.6-3.7

## Beschreibung

Die vorliegende Erfindung betrifft ein Verfahren nach dem Oberbegriff des Patentanspruchs 1.

Bekanntlich treten in Kommunikationsnetzen Echosignale auf, die dann unerwünscht sind, wenn die Laufzeit des Echos einen gewissen Wert überschreitet und damit die an einer Verbindung beteiligten Teilnehmer stört. Die Echosignale entstehen durch unvermeidliche Reflexionen beim 2-Draht-/4-Drahtübergang in der sogenannten Gabelschaltung oder durch direkte akustische Kopplung im Teilnehmerendgerät. Zur Reduktion oder vollständigen Elimination der Echosignale bei Verbindungen mit relativ langen Laufzeiten sehen die Netzbetreiber in bestimmten Vermittlungsknoten ihres Netzes Echounterdrückungseinrichtungen (Echo Control Device), z.B. Echosperren (Echo Suppressor) oder Echokompensatoren (Echo Canceller) vor, die bei Bedarf aktiviert und in die Verbindung eingefügt werden.

Eine Echo-Kontroll-Logik (Echo Control Logic) im Vermittlungsknoten entscheidet aufgrund verschiedener Kriterien, ob für eine bestimmte Verbindung eine Echounterdrückungseinrichtung eingefügt werden muss. Als Kriterien dienen:
- fest programmierte Leitweglenkungsdaten mit einer Information über die Distanz (und damit über die Laufzeit) zwischen dem Ursprung und dem Ziel einer Verbindung, wobei die Echounterdrükkungseinrichtung bei Überschreiten einer bestimmten Distanz eingefügt wird
- die beim Aufbau einer Verbindung dynamisch ermittelte Laufzeit des Nutzsignals
- Informationen bezüglich Endgerät/Anschluss (mit oder ohne Echo-Quelle), d.h. Angaben, die darüber Aufschluss geben, ob in einem Anschluss ein Echo entsteht oder nicht; und
- von anderen am Aufbau einer Verbindung beteiligten Vermittlungsknoten empfangene Informationen betreffend die Bereitstellung von Echounterdrückungseinrichtungen.

Dabei versucht die Echo-Kontroll-Logik jeweils eine Echounterdrückungseinrichtung zu aktivieren, die sich möglichst nahe bei der Echo-Quelle befindet.

Für die Bereitstellung von Echounterdrückungseinrichtungen sind gemäss ITU- (International Telecommunication Union) Rec. Q.115(97).zwei Möglichkeiten vorgesehen, nämlich einerseits die feste Zuordnung von Echounterdrückungseinrichtungen zu Übertragungswegen bzw. Leitungsbündeln und andererseits die Anordnung von mehreren Echounterdrückungseinrichtungen in einem Pool. In beiden Fällen wird bei Bedarf eine Echounterdrückungseinrichtung über ein Steuersignal vom Vermittlungsknoten aktiviert, wobei gemäss der ITU-Rec. Q.115(97) die oben erwähnten "technischen" Kriterien massgebend sind. Die Bereitstellung von Echounterdrückungseinrichtungen erfordert nicht unbeträchtliche zusätzliche Investitionen des Netzbetreibers in sein Netz. weshalb er nur soviele solche Einrichtungen vorsehen wird, wie unbedingt notwendig sind. Im Hinblick auf den stets zunehmenden Anteil von Non-Voice-Diensten wird die Bereitstellung von Echounterdrückungseinrichtungen in einem Pool am wirtschaftlichsten sein. Es ist nicht auszuschliessen, dass Netzbetreiber, die zum Aufbau von Verbindungen Kommunikationsnetze anderer Netzbetreiber benützen, gewollt oder ungewollt (durch das Aussenden manipulierter und für die Echo-Kontroll-Logik relevanter Informationen) unberechtigterweise auch deren Echounterdrückungseinrichtungen benützen und sich damit Investitionen für solche Einrichtungen im eigenen Netz ersparen können. Mit dem Aufbrechen der Monopolstrukturen treten die Netzbetreiber in einen zunehmend härter werdenden Wettbewerb untereinander, weshalb für die Netztbetreiber der wirtschaftliche Faktor immer mehr an Bedeutung gewinnt. Daher muss der unberechtigte Gebrauch von Ressourcen eines Netzbetreibers, wie z.B. der Echounterdrückungseinrichtungen, durch andere Netzbetreiber verhindert werden.

Der vorliegenden Erfindung liegt daher die Aufgabe zugrunde, ein Verfahren anzugeben, das einem Netzbetreiber ermöglicht, die Echounterdrückungseinrichtungen in seinem Kommunikationsnetz gezielt nur bestimmten über sein Netz verlaufenden Verbindungen zur Verfügung zu stellen.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Mit dem erfindungsgemässen Verfahren hat ein Netzbetreiber durch Kennzeichnung von Leitungsbündeln eine einfache Möglichkeit, bestimmte von fremden Netzen ankommende oder zu fremden Netzen abgehende Verbindungen zur Benutzung seiner Echounterdrückungseinrichtungen zu berechtigen bzw. die unberechtigte Benutzung zu verhindern. Beispielsweise kann er für jede Verbindung die Benutzung eigener Echounterdrückungseinrichtungen davon abhängig machen, von welchem benachbarten Netz die Verbindung kommt und/oder zu welchem benachbarten Netz die Verbindung führt. Er kann dann die Berechtigung an die Zahlung einer Benutzungsgebühr durch den Betreiber des benachbarten Netzes oder an andere Auflagen koppein. Weitere Vorteile des Verfahrens werden aus der folgenden Beschreibung ersichtlich.

Die Erfindung wird nachfolgend anhand einer Zeichnung beispielsweise näher erläutert. Dabei zeigt:
- Fig. 1: die Verbindung von Netzen verschiedener Netzbetreiber in einem Kommunikationsnetz
- Fig. 2: Einzelheiten zum Ablauf des Verfahrens

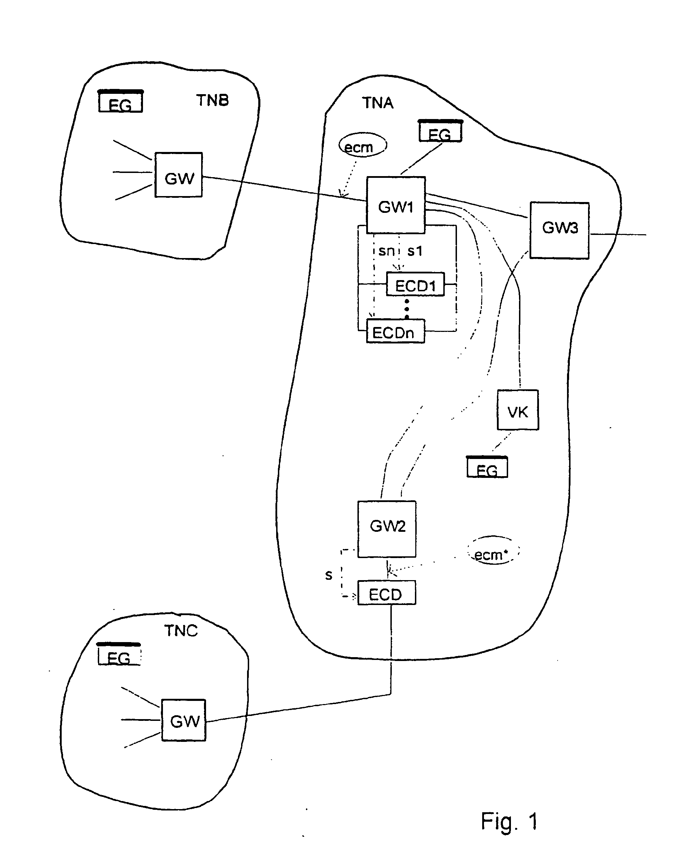

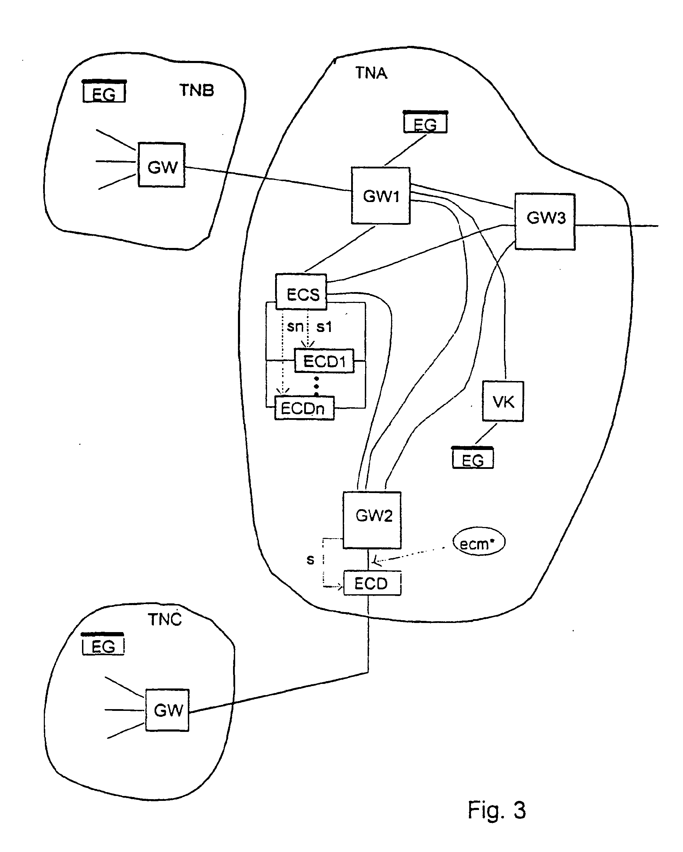

Fig.1 zeigt einen Ausschnitt aus einem Kommunikationsnetz mit drei Netzen TNA, TNB und TNC, welche verschiedenen Netzbetreibern gehören und von diesen betrieben und unterhalten werden. Die in Fig. 1 und 3 mit ausgezogenen Linien dargestellten Verbindungen zwischen den Elementen der Netze umfassen sowohl Nutzsignalkanäle als auch Signalisierkanäle. Einem Netz zugehörige Kommunikationsendgeräte EG sind über Vermittlungsknoten VK oder GW an das Netz angeschlossen. Verschiedenen Netzen zugehörige Kommunikationsendgeräte können miteinander Kommunikationsverbindungen aufbauen, wobei diese Verbindungen entweder direkt von einem Netz zum anderen oder über eines oder mehrere dazwischen liegende Netze verlaufen. Dies wird durch Zusammenschaltung der Netze über sogenannte Interkonnektionspunkte mit einem Netzübergang GW (Gateway) ermöglicht, die die notwendigen Anpassungen, wie z.B. für die Signalisierung, zwischen den Netzen vornehmen. Näheres zu solchen Netzübergängen findet sich in "Peter Bocker, ISDN - Das diensteintegrierende digitale Nachrichtennetz, 3. Auflage (Berlin 1990)" u.a. S. 47. Ein Netz TN hat einen oder mehrere Netzübergänge GW zu anderen Netzen TN. Die Netzübergänge zwischen zwei Netzen sind jeweils über ein Bündel von fest zugeordneten Leitungen miteinander verbunden. In Fig.1 weist das Netz TNA drei Netzübergänge GW1 .... GW3 auf. Die Vermittlungsfunktionen in den Netzübergängen GW1 und GW2 des Teilnetzes TNA ermöglichen die Herstellung von Verbindungen zum Netz TNB bzw. zum Netz TNC über Leitungen des zugehörigen Leitungsbündels. Der Netzübergang GW3 führt zu einem weiteren nicht dargestellten Netz.

In den Netzübergängen GW, d.h. in Vermittlungsknoten mit Leitungsbündeln zu anderen Netzen, sind Echounterdrückungseinrichtungen ECD vorgesehen, die zur Unterdrückung der eingangs erwähnten unerwünschten Echosignale in eine Verbindung eingefügt werden können. Die Bereitstellung von Echounterdrückungseinrichtungen ECD kann auf zwei Arten erfolgen: Die Einrichtungen können einer Leitung fest zugeordnet sein, wie dies in Fig. 1 für den Netzübergang GW2 des Netzes TNA angegeben ist. Die Echounterdrückungseinrichtungen können aber auch, wie dies in Fig.1 für den Netzübergang GW1 des Netzes TNA angegeben ist, in einem Pool mit mehreren Echounterdrückungseinrichtungen ECD1 ... ECDn bereitgestellt werden. Bei Bedarf, d.h. wenn im Zuge des Aufbaus einer über den Netzübergang GW1 des Netzes TNA verlaufenden Verbindung eine Echounterdrückung angefordert wird, wird die fest zugeordnete Echounterdrückungseinrichtung ECD aktiviert bzw. es wird eine der Echounterdrückungseinrichtungen ECD1 ... ECDn aus dem Pool in die betreffende Verbindung eingefügt und aktiviert. Die Aktivierung erfolgt mit einem Steuersignal s. Prinzipien für die Bereitstellung und den Betrieb von Echounterdrückungseinrichtungen in Kommunikationsnetzen werden in der ITU Rec. Q.115(97) "Logic for the Control of Echo Control Devices- und deren Anhang A empfohlen.

Ausgehend von der ITU Rec. Q.115(97) wird erfindungsgemass nun vorgesehen, bestimmte an Netzübergänge GW angeschlossene Leitungsbündel zur Verbindung zweier Netze mit einem Merkmal ecm zu kennzeichnen. Die Kennzeichnung erfolgt in einem Speicher, der die übrigen für den Aufbau von Verbindungen notwendigen Daten der Leitungsbündel enthält. Das Merkmal ecm stellt eine Ergänzung der üblichen Funktionen eines Netzübergangs GW dar. Es legt fest, ob über ein Leitungsbündel verlaufenden Verbindungen allenfalls vorhandene Echounterdrückungseinrichtungen zur Verfügung zu stellen sind oder nicht. Der Netzbetreiber erhält so die Möglichkeit, in seinem Netz vorhandene Echounterdrückungseinrichtungen gezielt nur solchen von einem fremden Netz (d.h. Netz eines anderen Netzbetreibers) kommenden bzw. zu einem fremden Netz führenden und über sein Netz verlaufenden Verbindungen zur Verfügung zu stellen, die bestimmte Bedingungen erfüllen. So kann er die Bereitstellung der Echounterdrückungseinrichtungen z.B. davon abhängig machen, von welchem benachbarten Netz die betreffende Verbindung kommt bzw. zu welchem benachbarten Netz die Verbindung führt.

Denjenigen Verbindungen, die über mit dem Merkmal ecm versehene Leitungsbündel verlaufen, wird keine Echounterdrückungseinrichtung zur Verfügung gestellt. Selbstverständlich könnte auch umgekehrt festgelegt werden, bei Benützung von mit dem Merkmal ecm gekennzeichneten Leitungsbündeln jeweils eine Echounterdrückungseinrichtung zur Verfügung zu stellen. Bei sich ändernden Gegebenheiten kann das Merkmal ecm ohne weiteres wieder gelöscht werden.

In Fig.1 ist beispielsweise im Netz TNA ein Merkmal ecm für das zum Netz TNB führende Leitungsbündel gesetzt. Bei Eintreffen einer Anforderung bzw. bei Erkennen der Notwendigkeit zum Einfügen einer Echounterdrückungseinrichtung im Zuge eines Verbindungsaufbaus werden daher für Verbindungen vom bzw. zum Netz TNB im Netz TNA vorhandene Echounterdrückungseinrichtungen nicht zur Verfügung gestellt sowie gegebenenfalls eintreffende und für die Echo-Kontroll-Logik relevante Informationen an das Netz TNB weitergeleitet. Hingegen ist für das zum Netz TNC führende Leitungsbündel kein Merkmal ecm gesetzt (in Fig. 1 mit "ecm*" dargestellt), weshalb für über dieses Leitungsbündel verlaufende Verbindungen allenfalls angeforderte Echounterdrückungseinrichtungen zur Verfügung gestellt werden. Obwohl in Fig.1 nicht dargestellt, können auch in den Netzen TNB, TNC etc. von anderen Netzen kommende und zu anderen Netzen gehende Leitungsbündel mit dem Merkmal ecm gekennzeichnet werden.

Ein gesetztes Merkmal ecm wirkt für beide Richtungen einer Verbindung, also sowohl in Richtung zum fremden Netz als auch in Richtung vom fremden Netz. Bei Betrachtung des Netzes TNA in Fig. 1 sind die benachbarten Netze TNB und TNC "fremde" Netze.

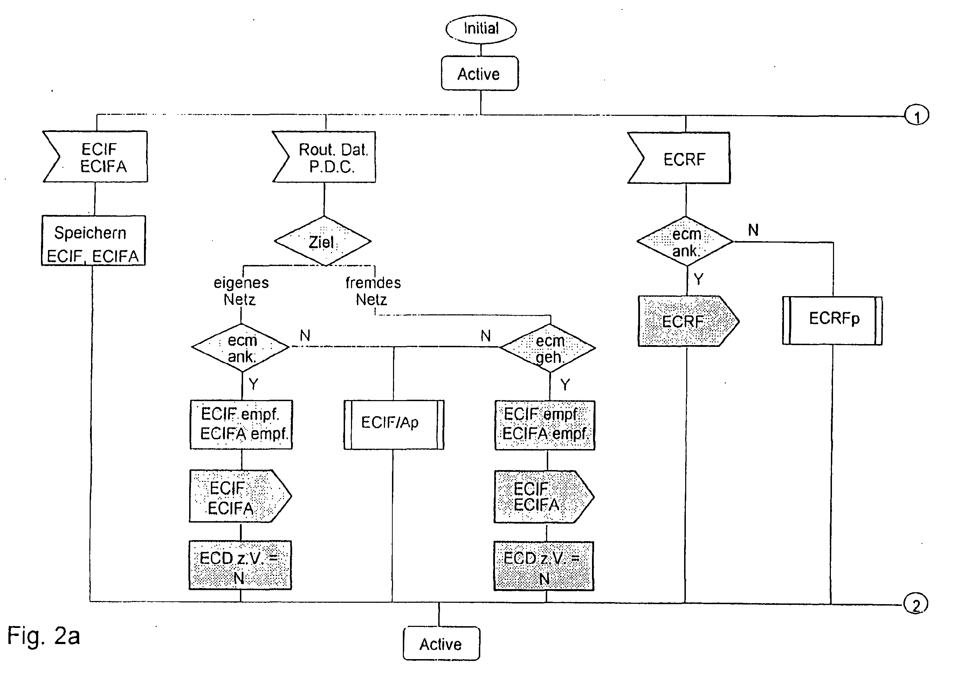

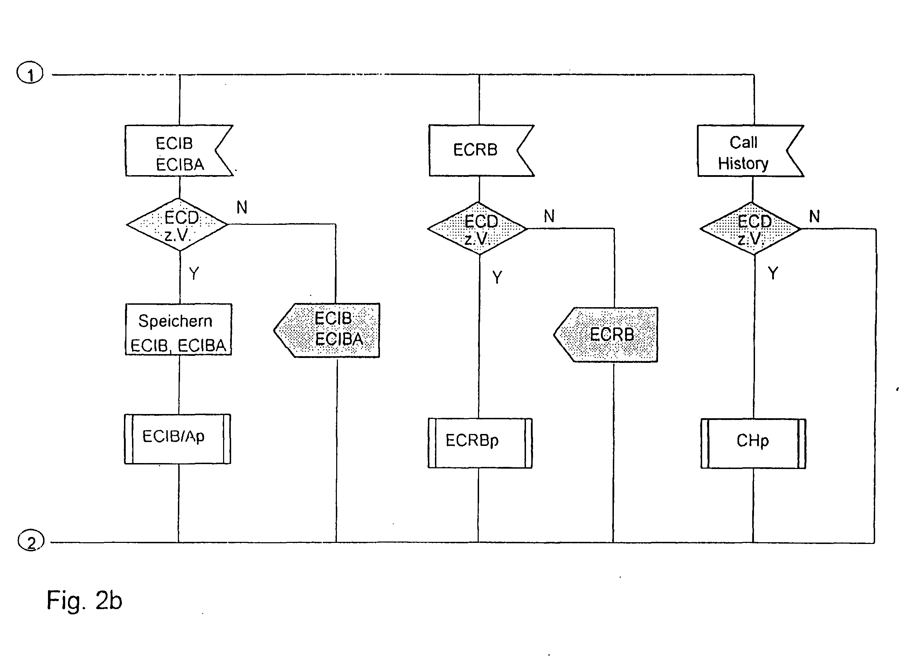

Fig.2 (bestehend aus den Teilfiguren 2a und 2b) zeigt Einzelheiten zum Ablauf des Verfahrens in der Echo-Kontroll-Logik eines Netzüberganges in einem SDL-Diagramm. Die Figur basiert auf der aus der ITU Rec. Q.115(97) bekannten Darstellung und enthält zusätzlich die im Zusammenhang mit der Erfindung relevanten Verfahrensschritte, welche zur Verdeutlichung grau unterlegt sind. Der Einfachheit halber werden dabei die gleichen Bezeichnungen wie in der ITU Rec. Q.115(97) verwendet.

Beim Aufbau einer Verbindung über ein Kommunikationsnetzwerk werden zwischen den beteiligten Netzen nebst den bekannten Verbindungsinformationen auch für die Echo-Kontroll-Logik relevante Informationen übertragen. Gemäss ITU Rec. Q.115(97) sind folgende Echo-Kontroll-Informationen vorgesehen:
ECIF: Echo Control Information Forward
ECIB: Echo Control Information Backward
ECRF: Echo Control Request Forward
ECRB: Echo Control Request Backward
ECIFA: Echo Control Information Forward, Additional
ECIBA: Echo Control Information Backward, Additional

Die Informationen ECIF, ECIFA, ECIB und ECIBA sind Bestandteil der Verbindungsaufbauinformationen und werden bei jedem Verbindungsaufbau übertragen. ECIF und ECIFA werden in Verbindungsaufbaurichtung (vom rufenden zum gerufenen Teilnehmer), ECIB und ECIBA in der umgekehrten Richtung übertragen. Hingegen treten die Informationen ECRF und ECRB in der Regel nur auf, wenn bei Änderung einer bereits bestehenden Verbindungskonstellation (wie z.B. beim Intelligent Network-Dienst "Follow on") aus einer bereits bestehenden Verbindung nachträglich eine Echounterdrückung erforderlich wird.

Beim Verbindungsaufbau von einem benachbarten (fremden) Netz eintreffende Informationen ECIF und ECIFA werden in der z.B. im Netzübergang angeordneten Echo-Kontroll-Logik - im folgenden kurz "Logikschaltung" genannt - gespeichert und bleiben gespeichert, bis die Verbindung wieder abgebaut worden ist. Aus den weiteren Verbindungsdaten (Routing-Daten) ermittelt die Logikschaltung die Netzzugehörigkeit des Zieles der gewünschten Verbindung. Dabei werden zwei Fälle unterschieden:
1. Das Ziel liegt im eigenen Netz
2. Das Ziel liegt in einem anderen Netz, d.h. in einem fremden Netz.

Der zweite Fall tritt entweder beim Aufbau einer Verbindung vom eigenen Netz zu einem fremden Netz oder bei einer ein Netz transitierenden Verbindung auf.

Im ersten Fall überprüft die Logikschaltung. ob für das Leitungsbündel, auf dem die Verbindungsanforderung eingetroffen ist, ein Merkmal ecm gesetzt ist. Ist dies der Fall, wird keine Echounterdrükkungseinrichtung zur Verfügung gestellt und die eingetroffenen Informationen ECIF und ECIFA bleiben unwirksam. Die Informationen werden unverändert zum nachfolgenden Vermittlungsknoten im gleichen Netz übertragen. Ferner wird in der Logikschaltung festgehalten, dass für diese Verbindung auch in späteren Verbindungskonstellationen keine Echounterdrückungseinrichtung bereitzustellen ist. Wenn hingegen kein Merkmal ecm gesetzt ist, behandelt die Logikschaltung die Informationen ECIF und ECIFA mit der Prozedur ECIF/Ap gemäss ITU Rec. Q.115(97). d.h. sie aktiviert eine allenfalls verfügbare Echounterdrückungseinrichtung und stellt sie der betreffenden Verbindung zu Verfügung.

Im zweiten Fall prüft die Logikschaltung, ob für das Leitungsbündel, über das die zum Ziel im fremden Netz führende Verbindung verläuft, ein Merkmal ecm gesetzt ist. Ist dies der Fall, wird keine Echounterdrückungseinrichtung zur Verfügung gestellt. Die eingetroffenen Informationen ECIF und ECIFA bleiben unwirksam und werden unverändert zum benachbarten Netz übertragen. Femer wird in der Logikschaltung festgehalten, dass für diese Verbindung auch in späteren Verbindungskonstellationen keine Echounterdrückungseinrichtung bereitzustellen ist. Wenn hingegen kein Merkmal ecm gesetzt ist, behandelt die Logikschaltung die Informationen ECIF und ECIFA mit der Prozedur ECIF/Ap gemäss ITU Rec. Q.115(97), d.h. sie aktiviert eine allenfalls verfügbare Echounterdrükkungseinrichtung.

Wenn im Zuge des oben betrachteten Verbindungsaufbaus später Informationen ECIB oder ECIBA in den Netzübergang gelangen, überprüft die Logikschaltung, ob aufgrund früherer Überprüfungen für diese Verbindung schon festgelegt worden ist, ob eine Echounterdrückungseinrichtung zur Verfügung zu stellen ist. Wenn dies nicht zutrifft, bleiben die Informationen ECIB bzw. ECIBA unwirksam und werden unverändert weitergeleitet. Wenn hingegen eine Echounterdrückungseinrichtung zur Verfügung zu stellen ist, werden diese Informationen mit der Prozedur ECIB/Ap gemäss ITU Rec. Q.115(97) bearbeitet.

Wenn z.B. beim Aufbau einer Follow on-Verbindung aus einer bereits bestehenden Verbindung eine Information ECRF im Netzübergang eintrifft, überprüft die Logikschaltung wiederum, ob für das betreffende ankommende Leitungsbündel ein Merkmal ecm gesetzt ist. Gegebenenfalls wird keine Echounterdrückungseinrichtung zur Verfügung gestellt und die Information unverändert weitergeleitet. Ist hingegen kein Merkmal ecm gesetzt, bearbeitet die Logikschaltung die Information ECRF mit der Prozedur ECRFp gemäss ITU Rec. Q.115(97) und stellt eine allenfalls verfügbare Echounterdrükkungseinrichtung zur Verfügung.

Wenn aus einer bestimmten Konstellation einer bereits bestehenden Verbindung eine Information ECRB im Netzübergang eintrifft, weiss die Logikschaltung aufgrund des bisherigen Verbindungsaufbaus, ob für diese Verbindung eine Echounterdrückungseinrichtung zur Verfügung zu stellen ist oder nicht. Wenn nein, wird die Information unverändert weitergeleitet. Wenn ja, wird die Information ECRB mit der Prozedur ECRFp gemäss ITU Rec. Q.115(97) bearbeitet und eine allenfalls verfügbare Echounterdrückungseinrichtung zur Verfügung gestellt.

Beim Aufbau einer Verbindung werden die Laufzeiten zwischen den an der Verbindung beteiligten Vermittlungsknoten summiert und das Ergebnis (Call History) nach Beendigung des Verbindungsaufbaus von der Zielvermittlungsstelle an die Ursprungsvermittlungsstelle geschickt. Drängt sich aufgrund der übermittelten Laufzeitinformation der Einsatz von Echounterdrückungseinrichtungen auf, überprüft die Logikschaltung zunächst, ob jeweils aufgrund früherer Überprüfungen des Merkmals ecm eine solche Einrichtung zur Verfügung gestellt werden soll oder nicht. Wenn nein, bleiben die für die Echo-Kontroll-Logik relevanten Informationen unwirksam und es wird keine Echounterdrückungseinrichtung zur Verfügung gestellt. Wenn ja, werden die für die Echo-Kontroll-Logik relevanten Informationen mit der Prozedur CHp gemäss ITU Rec. Q.115(97) behandelt und gegebenenfalls eine Echounterdrückungseinrichtung zur Verfügung gestellt.

In dem anhand von Fig. 1 beschriebenen Beispiel sind die im Netz TNA vorgesehenen Echounterdrückungseinrichtungen ECD im Netzübergang GW1 in einem Pool angeordnet und im Netzübergang GW2 einem Leitungsbündel fest zugeordnet. Aus verschiedenen Gründen, wie z.B. Wirtschaftlichkeit oder besonderen Anforderungen an die Netzarchitektur, kann stattdessen auch vorgesehen werden, die Echounterdrückungseinrichtungen ECD eines Netzes zentral anzuordnen, wie dies in Fig.3 gezeigt ist. Hierzu sind die Netzübergänge GW1 bis GW3 des Netzes TNA mit einer zentralen Echounterdrückungseinrichtungsstelle ECS verbunden, in der mehrere Echounterdrückungseinrichtungen ECD1 bis ECDn zur Verfügung stehen. Das zuvor anhand von Fig.2 beschriebene Verfahren lässt sich in einer solchen Anordnung ebenfalls anwenden:

Trifft beispielsweise im Netzübergang GW1 des Netzes TNA vom Netz TNB ein Verbindungswunsch mit einer Anforderung für eine Echounterdrückung ein, wird je nachdem; ob für das entsprechende Leitungsbündel das Merkmal ecm gesetzt ist oder nicht, die Information "ecm" oder "ecm" zusammen mit den übrigen Verbindungsinformationen an die zentrale Echounterdrückungseinrichtungsstelle ECS geleitet. Die Information wird hierauf von einer dort vorhandenen Echo-Kontroll-Logik gemäss dem Ablaufdiagramm von Fig.2 bewertet und erforderlichenfalls eine Echounterdrückungseinrichtung ECD aus der zentralen Echounterdrückungseinrichtungsstelle ECS in die Verbindung eingefügt.

## Patentansprüche

1. Verfahren zum Bereitstellen von Einrichtungen zur Echounterdrückung in Kommunikationsverbindungen, die über mindestens zwei miteinander über Netzübergänge verbindbare Netze führt, über die daran angeschlossene Endgeräte miteinander verbindbar sind, wobei in den Netzen Einrichtungen zur Echounterdrückung vorgesehen sind, welche bei Bedarf angefordert und aufgrund vorgegebener Kriterien in aufgebaute Verbindungen eingefügt werden, um auftretende Echosignale zu unterdrücken,
**dadurch gekennzeichnet, dass**
in Vermittlungsknoten (GW) eines Netzes (TNA), die zu anderen Netzen (TNB, TNC) führende Leitungsbündel aufweisen, bestimmte von einem anderen Netz (TNB, TNC) ankommende und/oder zu einem anderen Netz (TNB, TNC) abgehende Leitungsbündel mit einem Merkmal (ecm) **gekennzeichnet** werden und dass beim Aufbau einer Verbindung über ein solches Leitungsbündel beim Eintreffen einer Anforderung zur Echounterdrückung dieser Verbindung im Netz (TNA) vorhandene Einrichtungen (ECD) für die Echounterdrückung jeweils in Abhängigkeit vom Wert des vorgenannten Merkmals (ecm) zur Verfügung gestellt werden.

2. Verfahren nach Anspruch 1,
**dadurch gekennzeichnet, dass**
bei einer Anforderung zur Echounterdrückung Einrichtungen (ECD) zur Echounterdrückung in die betreffende Verbindung eingefügt werden, die in Vermittlungsknoten (GW) eines Netzes (TNA) vorgesehen sind.

3. Verfahren nach Anspruch 2,
**dadurch gekennzeichnet, dass**
bei einer Anforderung zur Echounterdrückung Einrichtungen (ECD) zur Echounterdrückung in die betreffende Verbindung eingefügt werden, die an einer im Netz (TNA) zentralen Stelle (ECS) vorgesehen sind.

4. Verfahren nach einem der Ansprüche 1 bis 3,
**dadurch gekennzeichnet, dass**
die Kennzeichnung der Leitungsbündel mit dem Merkmal (ecm) davon abhängig gemacht wird, welchem Netzbetreiber das Netz gehört, von dem ein Leitungsbündel kommt und/oder welchem Netzbetreiber das Netz gehört, zu dem ein Leitungsbündel führt.

## Claims

1. Method for providing devices for echo compensation in communication connections, which is routed via at least two networks which can be connected to one another via network gateways, via which terminals connected thereto can be connected to one another, with devices for echo compensation being provided in the networks, which are requested if required and are inserted into established connections as a result of predetermined criteria, **characterised in that**,
in gateways (GW) of a network (TNA), which comprise trunk circuits leading to other networks (TNB, TNC), specific trunk circuits incoming from another network (TNB, TNC) and/or outgoing to another network (TNB, TNC) are **characterized** with a feature (ecm) and that, when a connection is set up via a trunk circuit of this type, when a request is received for echo compensation of this connection in the network (TNA), devices (ECD) present for the echo compensation are made available in each instance as a function of the value of the aforementioned feature (ecm).

2. Method according to claim 1,
**characterised in that**,
with a request for echo compensation, devices (ECD) for echo compensation are inserted into the relevant connection, which are provided in the gateways (GW) of a network (TNA).

3. Method according to claim 2,
**characterised in that**,
with a request for echo compensation, devices (ECD) for echo compensation are inserted into the relevant connection, which are provided at a central location (ECS) in the network (TNA).

4. Method according to one of claims 1 to 3
**characterised in that**
the identification of the trunk circuit with the feature (ecm) is made dependent on the network operator who owns the network from which a trunk circuit comes and/or on the network operator who owns the network to which a trunk circuit leads.

## Revendications

1. Procédé d'activation de dispositifs de suppression d'écho dans des liaisons de communication, qui passent par au moins deux réseaux pouvant être reliés entre eux par des passerelles interréseaux, réseaux par lesquels les terminaux qui y sont raccordés peuvent être reliés les uns aux autres, des dispositifs de suppression d'écho étant prévus dans les réseaux et étant appelés en cas de besoin et insérés sur la base de critères prescrits dans des liaisons établies pour supprimer des signaux d'écho qui apparaissent,
**caractérisé en ce que**
dans des points (GW) nodaux de commutation d'un réseau (TNA) qui ont un faisceau de lignes menant à d'autres réseaux (TNB, TNC), certains faisceaux de lignes arrivant d'un autre réseau (TNB, TNC) et/ou partant d'un autre réseau (TNB, TNC) sont **caractérisés par** une caractéristique (ecm) et en ce que, lors de l'établissement d'une liaison par un faisceau de lignes de ce genre, il est, lors de l'arrivée d'une demande de suppression d'écho, mis à la disposition de cette liaison des dispositifs (ECD) présents dans le réseau (TNA) de suppression de l'écho, respectivement en fonction de la valeur de ladite caractéristique (ecm).

2. Procédé suivant la revendication 1, **caractérisé en ce que**, lors d'une demande de suppression d'écho, il est inséré dans la liaison concernée des dispositifs (ECD) de suppression d'écho qui sont prévus dans des points (GW) nodaux de commutation d'un réseau (TNA).

3. Procédé suivant la revendication 2, **caractérisé en ce que**, lors d'une demande de suppression d'écho, il est inséré dans la liaison concernée des dispositifs (ECD) de suppression d'écho qui sont prévus sur un poste (ECS) central dans le réseau (TNA).

4. Procédé suivant l'une des revendications 1 à 3, **caractérisé en ce que** l'on fait dépendre la caractérisation du faisceau de liaison par la caractéristique (ecm) du point de savoir à quel exploitant de réseau appartient le réseau dont vient un faisceau de lignes et/ou à quel exploitant de réseau appartient le réseau auquel mène un faisceau de lignes.
